# EUROPÄISCHE PATENTANMELDUNG

(11) **EP 0 583 568 A1**
(43) Veröffentlichungstag der Anmeldung: **23.02.1994**
(21) Anmeldenummer: 93109428.8
(22) Anmeldetag: 12.06.1993
(51) Int. Cl.: G02B 6/42, H01S 3/025

(54) **Anordnung zum Einbau von Halbleiter-Laserdioden in optomechanische Systeme**

(30) Priorität: 19.08.1992 DE 9211110 U
(71) Anmelder: BODENSEEWERK GERÄTETECHNIK GmbH, D-88641 Überlingen (DE)
(72) Erfinder: Langner, Klaus, W-7770 Uberlingen 12 (DE)
(74) Vertreter: Weisse, Jürgen, Dipl.-Phys. Patentanwalt

(57) **Zusammenfassung**

Zum Einbau von Halbleiter-Laserdioden in optomechanische Systeme ist die Halbleiter-Laserdiode (22) in ein Grundgehäuse (10) eingesetzt. Eine Linse (56) oder ein sonstiges optisches Glied des optomechanischen Systems ist auf einer an das Grundgehäuse (10) austauschbar angesetzten Brücke (32) angeordnet und gegenüber dem Grundgehäuse (10) justierbar.

## Beschreibung

Die Erfindung betrifft eine Anordnung zum Einbau von Halbleiter-Laserdioden in optomechanische Systeme.

Bekannte Anordnungen mit Gehäusen zum Einbau von Halbleiter-Lasedioden in optomechanische Systeme sind auf den jeweils speziellen Anwendungsfall abgestimmt. Der Neuerung liegt demgegenüber die Aufgabe zugrunde, eine Anordnung zum Einbau von Halbleiter-Laserdioden in optomechanische Systeme so auszubilden, daß unter Verwendung weniger standardisierter Bauteile verschiedene Typen von Halbleiter-Laserdioden verwendet und verschiedene Anwendungsfälle erfaßt werden können.

Erfindungsgemäß wird diese Aufgabe gelöst durch ein Grundgehäuse, in welches die Halbleiter-Laserdiode eingesetzt ist und eine an das Grundgehäuse austauschbar angesetzte Brücke, auf welcher ein mit der Halbleiter-Laserdiode zusammenwirkendes optisches Glied des optomechanischen Systems gegenüber dem Grundgehäuse justierbar angeordnet ist.

Dabei kann an das Grundgehäuse wahlweise wenigstens eine weitere, ein optisches Glied tragende Brücke ansetzbar sein. Das optische Glied kann eine Linse oder ein Linsensystem in einer Fassung sein. Die Fassung kann in drei Achsen justierbar sein. Das weitere optische Glied kann ein Wellenleiter sein.

Die Linse oder das Linsensystem sammeln dann das Laserlichtbündel der Halbleiter-Laserdiode auf der Eintrittsöffnung des Wellenleiters. Der Wellenleiter kann eine lichtleitende Faser mit einer reflexionsarmen Schrägschliffanordnung umfassen. Das weitere optische Glied kann aber auch einen optischen Isolator oder einen optischen Modulator enthalten. Verschiedene Typen von Halbleiter-Laserdioden können mit dem gleichen Grundgehäuse verwendet werden, indem die Halbleiter-Laserdiode in einem Adapter gehaltert ist, der an die bestimmte Halbleiter-Laserdiode angepaßt ist, und der Adapter seinerseits in einer standardisierten Aufnahme des Grundgehäuses gehaltert ist. Weiterhin kann das Grundgehäuse eine Aufnahme enthalten, in welcher elektrische Bauteile zum Betrieb der Halbleiter-Laserdiode angeordnet sind.

Ausführungsbeispiele der Erfindung sind nachstehend unter Bezugnahme auf die zugehörigen Zeichnungen näher erläutert.
- Fig.1: zeigt das Grundgehäuse einer Anordnung zum Einbau von Halbleiter-Lasedioden in optomechanische Systeme in Verbindung mit einer ersten Brücke, die ein Linsensystem trägt, und einer zweiten Brücke mit einem Wellenleiter.
- Fig.2: zeigt eine Endansicht einer Brücke, die eine besonders feinfühlige Einstellung gestattet.
- Fig.3: zeigt eine Draufsicht der Brücke von Fig.2.

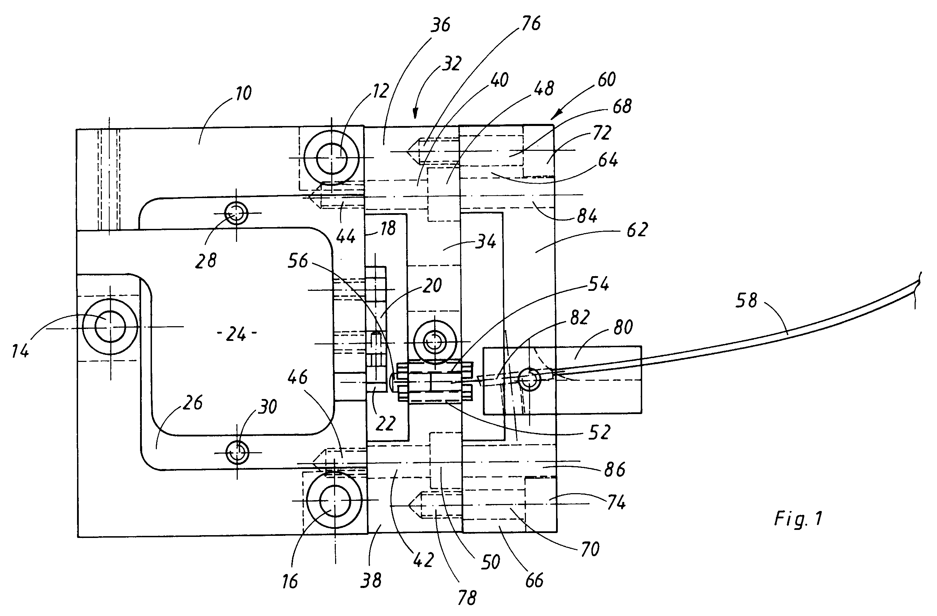

In Fig.1 ist mit 10 ein Grundgehäuse bezeichnet. Das Grundgehäuse 10 ist mit Befestigungsbohrungen 12, 14 und 16 vesehen. Die Befestigungsbohrungen 12, 14 und 16 gestatten eine Befestigung des Grundgehäuses 10 an anderen Bauteilen. An einer Stirnwand 18 des Grundgehäuses 10 ist ein Adapter 20 befestigt. Der Adapter 20 trägt eine Lalbleiter-Laserdiode 22. Der Adapter 20 ist an die spezielle Halbleiter-Laserdiode 22 angepaßt. Mit dem Grundgehäuse 10 können verschiedene Adapter 20 verbunden werden, die an verschiedene Typen von Halbleiter-Laserdioden angepaßt sind. Hinsichtlich ihrer Montage an dem Grundgehäuse 10 stimmen diese Adapter 20 überein.

Das Grundgehäuse 10 enthält einen Raum 24. Der Raum 24 kann die Elektronik der Halbleiter-Laserdiode 22 aufnehmen. Eine Leiterplatte sitzt auf einem Rand 26 auf und ist durch Schrauben befestigt, die in Gewindebohrungen 28 und 30 eingeschraubt sind.

An dem Grundgehäuse 10 sitzt eine Brücke 32. Die Brücke weist einen Mittelteil 34 und vorstehende Endteile 36 und 38 auf. Die Endteile 36 und 38 weisen Bohrungen 40 bzw. 42 auf. Die Bohrungen 40 und 42 der Endteile 36 und 38 der Brücke 32 fluchten mit Gewindebohrungen 44 bzw. 46 in dem Grundgehäuse 10. Die Brücke 32 ist durch Schrauben mit dem Grundgehäuse 10 lösbar verbunden. Die Köpfe der Schrauben sind dabei in Ausnehmungen 48 und 50 versenkt.

Die Brücke 34 weist eine Gewindebohrung 52 mit einem Feingewinde auf. In dieser Gewindebohrung sitzt eine Fassung 54. Die Fassung weist zu diesem Zweck ein entsprechendes Feingewinde auf. Diese Fassung enthält eine Linse 56 oder ein Linsensystem. In Fig.1 ist eine Stäbchenlinse dargestellt. Die optische Achse der Linse 56 geht durch die Halbleiter-Laserdiode 22 und verläuft im wesentlichen längs der Achse des von der Halbleiter-Laserdiode 22 ausgesandten Laserlichtbündels. Die Linse 56 fokussiert das Laserlichtbündel auf der Eintrittsöffnung eines Wellenleiters. Der Wellenleiter ist hier eine lichtleitende Faser 58, z.B. aus Glas.

Das Ende der Faser 58 ist mittels einer zweiten Brücke 60 an dem Grundgehäuse 10 und in definierter Lage zu der Linse 56 gehaltert. Die zweite Brücke 60 enthält ebenfalls einen Mittelteil 62 und vorstehende Endteile 64 und 66. Die Endteile 64 und 66 weisen Bohrungen 68 bzw. 70 auf, an die sich nach außen erweiterte Ausnehmungen 72 bzw. 74 anschließen. Die Bohrungen 68 und 70 fluchten mit Gewindebohrungen 76 bzw. 78 in den Endteilen 36 bzw. 38 der Brücke 32. Die Gewindebohrungen 76 und 78 sind Sacklochbohrungen.

In dem Mittelteil 62 der Brücke 60 sitzt eine Fassung 80 für die lichtleitende Faser 58 und eine Schrägschliffanordnung 82 zur reflexionsarmen Einkopplung des fokussierten Laserlichtbündels in die Faser 58.

In den Endteilen 64 und 66 sind Bohrungen 84 und 86 vorgesehen. Diese Bohrungen 84 und 86 fluchten mit den Bohrungen 40 bzw 42. Durch die Bohrungen 84 und 86 hindurch können die Schrauben in den Gewindebohrungen 76 bzw. 78 angezogen und in einer bestimmten Stellung fixiert werden.

Die verschiedenen optischen Glieder müssen genau zueinander justiert und dann in der justierten Lage fixiert werden.

Die hierzu erforderlichen Stellwege sind recht klein. Die Justage der Linse 56 kann in "x"- und "y"-Richtung, d.h nach oben und nach vorn in Fig.1, dadurch erfolgen, daß die Brücke translatorisch im Bohrungssplel der Schrauben verschoben wird. Die Justage in "z"-Richtung, waagerecht in Fig.1, erfolgt über das Feingewinde der Fassung 54. Ein weiterer Freiheitsgrad ist der Winkel der Brücke um die "z"-Achse. Zur Justage dieses Winkels kann -wieder im Bohrungsspiel der Schrauben- das obere Endteil 64 nach hinten und das untere Endteil nach vorn in Fig.1 verschoben werden oder umgekehrt. Die Justage erfolgt anhand der Strahlbewegung im Fernfeld mit einer Wandlerkarte, einem Sichtgerät oder -bei sichtbarem Licht- durch direkte Beobachtung.

In ähnlicher Weise kann die Justage der zweiten Brücke 60 erfolgen.

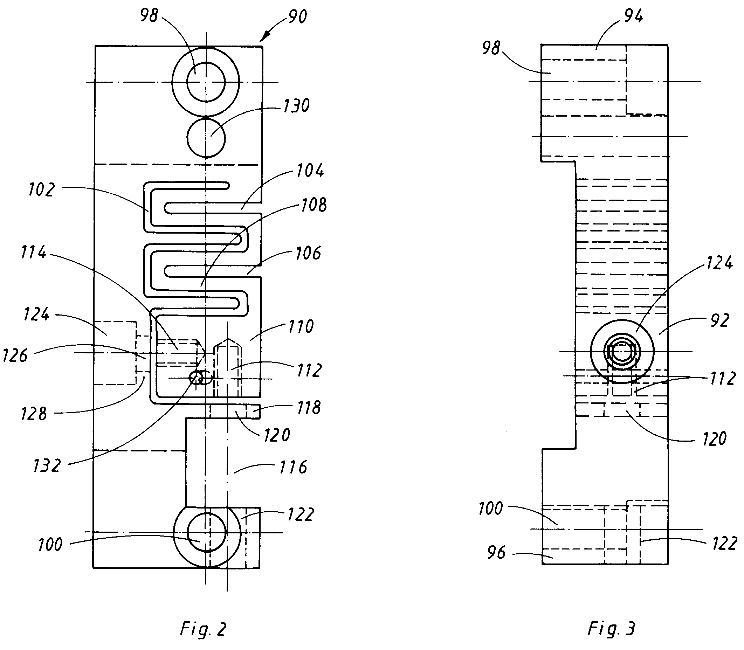

Fig.2 und 3 zeigen eine Brücke 90, mittels welcher eine besonders feinfühlige Justage der optischen Glieder erfolgen kann.

Die Brücke 90 weist wieder einen Mittelteil 92 und Endteile 94 und 96 auf. Die Endteile 94 und 96 weisen Bohrungen 98 bzw. 100 entsprechend den Bohrungen 68 und 70 der Brücke 60 in Fig.1 auf. Bei der Brücke 92 ist durch einen mäanderförmigen Schnitt 102 und gerade Einschnitte 104 und 106 ein mäanderförmiger Federsteg 108 gebildet. Am Ende des Federsteges 108 sitzt ein von dem Schnitt 102 und der Seitenfläche der Brücke 90 begrenzter Block 110. Der Block 110 weist zwei Gewindebohrungen 112 und 114 auf. Die Gewindebohrung 112 erstreckt sich in Richtung der "x"-Achse. Die Gewindebohrung 114 erstreckt sich in Richtung der "y"-Achse. In dem Mittelteil 92 ist ein Ausschnitt 116 gebildet. Zwischen dem Ausschnitt 116 und dem Block 110 verbleibt ein Steg 118. In dem Steg 118 ist eine Bohrung 120 fluchtend mit der Gewindebohrung 112 angebracht. Fluchtend mit der Bohrung 120 ist weiterhin eine Bohrung 122 vorgesehen, die sich von der Stirnfläche der Brücke 90 bis zu dem Ausschnitt 116 erstreckt. Eine Stellschraube ist in die Gewindebohrung 112 eingeschraubt und liegt mit ihrem Kopf an dem Steg 118 auf der Seite des Ausschnitts 116 an. Die Stellschraube kann durch die Bohrung 122 hindurch mit einem Schraubendreher verdreht werden. Dadurch wird der Block 110 gegen die Federwirkung des mäanderförmigen Federsteges 108 in "x"-Richtung nach unten in Fig.2 gezogen. Das ermöglicht eine feinfühlige Ausrichtung längs der "x"-Achse. In entsprechender Weise ist eine Stellschraube in die Gewindebohrung 114 eingeschraubt. Der Kopf dieser Stellschraube liegt auf dem Grund einer erweiterten Ausnehmung 124 des Mittelteils 92 an, die etwa mit der Gewindebohrung 114 fluchtet. Der Schaft der Schraube erstreckt sich durch einen gegenüber dem Schaft erweiterten Durchbruch 126 in einem zwischen der Ausnehmung 124 und dem Block 110 gebildeten Steg 128. Mittels der Stellschraube kann eine Justage des Blocks 110 in "y"-Richtung erfolgen, also in der Richtung senkrecht zur Papierebene von Fig.1 und 3.

Eine Bohrung 130 entspricht der Bohrung 68 von Fig.1.

In dem Block 110 ist eine Bohrung 132 vorgesehen. Die Bohrung 132 nimmt eine Schrägschliffanordnung entsprechend Teil 82 von Fig.1 auf.

Der beschriebene Grundaufbau gestattet es, mit einem "Baukastensystem" von relativ wenigen Komponenten verschiedenartige Anordnungen zum Einbau von Halbleiter-Laserdioden in optomechanische Systeme herzustellen und genau zu justieren.

## Patentansprüche

1. Anordnung zum Einbau von Halbleiter-Laserdioden in optomechanische Systeme, **gekennzeichnet durch** ein Grundgehäuse (10), in welches die Halbleiter-Laserdiode (22) eingesetzt ist und eine an das Grundgehäuse (10) austauschbar angesetzte Brücke (32), auf welcher ein mit der Halbleiter-Laserdiode zusammenwirkendes optisches Glied (56) des optomechanischen Systems gegenüber dem Grundgehäuse (10) justierbar angeordnet ist.

2. Anordnung nach Anspruch 1, **dadurch gekennzeichnet, daß** an das Grundgehäuse (10) wahlweise wenigstens eine weitere, ein optisches Glied (82,58) tragende Brücke (60) ansetzbar ist.

3. Anordnung nach Anspruch 1, **dadurch gekennzeichnet, daß** das optische Glied eine Linse (56) oder ein Linsensystem in einer Fassung (54) ist.

4. Anordnung nach Anspruch 3, **dadurch gekennzeichnet, daß** die Fassung (54) in drei Achsen justierbar ist.

5. Anordnung nach Anspruch 3, **dadurch gekennzeichnet, daß** das weitere optische Glied ein Wellenleiter (58) ist.

6. Anordnung nach Anspruch 5, **dadurch gekennzeichnet, daß** der Wellenleiter eine lichtleitende Faser (58) mit einer reflexionsarmen Schrägschliffanordnung (82) umfaßt.

7. Anordnung nach Anspruch 3, **dadurch gekennzeichnet, daß** das weitere optische Glied einen optischen Isolator enthält.

8. Anordnung nach Anspruch 3, **dadurch gekennzeichnet, daß** das weitere optische Glied einen optischen Modulator enthält.

9. Anordnung nach Anspruch 1, **dadurch gekennzeichnet, daß** die Halbleiter-Laserdiode (22) in einem Adapter (20) gehaltert ist, der an die bestimmte Halbleiter-Laserdiode angepaßt ist, und der Adapter (20) seinerseits an einer standardisierten Aufnahme des Grundgehäuses (10) gehaltert ist.

10. Anordnung nach Anspruch 1, **dadurch gekennzeichnet, daß** das Grundgehäuse (10) eine Aufnahme (24) enthält, in welcher elektrische Bauteile zum Betrieb der Halbleiter-Laserdiode (22) angeordnet sind.

11. Anordnung nach einem der Ansprüche 1 bis 10, **dadurch gekennzeichnet, daß** das optische Glied an einem durch Einschnitte (102,104,106) gebildeten mäanderförmigen Federsteg (108) der Brücke (90) angeordnet sind, der durch Stellschrauben in zwei zueinander senkrechten Koordinaten verstellbar ist.
